Europäisches Patentamt

European Patent Office

Office européen des brevets

(19)

(11) Publication number: **0 011 957**

A1

(12) **EUROPEAN PATENT APPLICATION**

(21) Application number: **79302534.7**

(22) Date of filing: **12.11.79**

(51) Int. Cl.³: **F 16 C 35/067**

(30) Priority: **13.11.78 AU 6760/78**

(43) Date of publication of application:
**11.06.80 Bulletin 80/12**

(84) Designated Contracting States:
**DE FR GB IT SE**

(71) Applicant: **TUBEMAKERS OF AUSTRALIA LIMITED**
**41 Currie Street**
**Adelaide, South Australia(AU)**

(72) Inventor: **Lumsden, John**
**8 Fuller Street**
**Walkerville, South Australia(AU)**

(74) Representative: **Roos, Michael John et al,**
**KILBURN & STRODE 30 John Street**
**London WC1N 2DD(GB)**

(54) **Bearing tubes.**

(57) A bearing tube construction in which the tube (10) has a series of inwardly depressed lugs (17) spaced apart peripherally around the tube to define a series of shoulders (16) at the inner end of the housing to limit inward movement of the outer race of the bearing.

FIG 2

EP 0 011 957 A1

Croydon Printing Company Ltd.

**"BEARING TUBES"**

This invention relates to certain improvements in bearing tube construction such as axle tubes or wheel bearings.

In the axles of automotive vehicles the rear axle usually has a differential housing at the centre from which project outwardly a pair of axle tubes which at their outer ends support the rear wheel bearings.

The bearings carry both the load and thrust and the ends of the axle tubes therefore are specially constructed to take these bearings both in load and thrust, and further the axle tubes have on them a flange which is adapted to engage a bearing retainer when the bearing is in position.

The usual practice at the present time is to weld to the end of the axle housing a member which is machined out neatly to take the bearing and has on it a peripheral flange to which a retainer for the bearing is bolted, the member which is welded to the end of the axle tubes being of substantial construction and usually being a forging which because of its method of construction has a substantial radius when the blank is forged and therefore requires considerable machining to provide the seating recess for the bearing.

The reason this construction is used is to ensure that the bearing can take the necessary inward thrust on its outer race, the outward thrust being taken by the bearing retaining member.

It is also known to thicken and shape the end of the axle tubes by heating and working the axle tubes to produce the required thickness which will then allow a sufficient bearing recess to be machined to support the bearing against inward thrust while still providing the strength necessary to carry the required load. However, this method requires considerable work and, because it is nece·sary to heat the axle tubes, scale formation occurs with the subsequent necessity of removal of such scale.

Because it is the practice to use standard axle tubes and standard differential fittings, the end of the tube sometimes requires reducing in diameter, and it is known to have the bearing supporting forging fitted over a reduced end of the axle tube and then welded rigidly to the axle tube so that when the bearing recess is machined the end of the axle tube forms the inner thrust member for the outer race of the bearing, and in some cases the outer end portion of the axle tube is thickened inwards only to provide the necessary flange when the bearing socket is machined to take the inward thrust of the bearing, but whatever method has been used heretofore it is generally necessary either to use a separate forged member welded to the end of the axle tube or to thicken the end of the axle tube by heat treatment and compression to have sufficient material to achieve the necessary thrust member at the inner end of the bearing recess.

It is known to form axle tubes in two press-metal halves and to weld these together along longitudinal lines and these halves can be specifically shaped to provide a bearing support and end flange, and an example of this construction is disclosed in U.S. Patent No. 1,689,989 by Herbert H. Williams.

It is also known to support bearings in tubes such as conveyor rollers in which the tubes have an annular depression to act as an inward limiter to a bearing support member as shown for instance in U.S. Patent No. 3,924,908 by Robert W. Gotham et al.

A complete peripheral groove however has the disadvantage that thinning of the wall may occur in producing the groove and also subsequent machining of the inside surface of the tube to produce the desired fit will in metal removal result in a weakened plane of cross-section.

It is also known on wheel hubs to have castings into the two ends of which bearings fit, the castings provided with shoulders to take inward thrust.

It is an object of the present invention to provide a simpler form of bearing socket on axle tubes or in wheel hubs or similar structures which will not necessitate the thickening of the tube or the attachment thereto of a separate bearing supporting forging.

According to one aspect of the present invention a bearing tube construction comprises a tube, a bearing housing at least at one end portion of said tube, characterised by a series of inwardly depressed lugs spaced apart peripherally around the said tube to define a series of shoulders at the inner end of the said bearing housing to limit inward movement of a bearing.

The bearing may have a flange formed on it preferably by welding a plate to the tube which either fits on the tube or is butted against it and in both cases is welded thereto,

The depressed lugs are preferably formed to incline from an inner part remote from the bearings towards the position where the inner bearing locating wall of the bearing socket is to be formed and can for instance consist of six such depressed lugs equally spaced around the circumference of the tube, the metal of which is not punched out but merely displaced so that it simply forms an inward depressed lug preferably of saw-tooth shape which then allows the inner surface of the tube, preferably after internally machining same, to receive the outer race of the bearing, the machining on those ends of the lugs which locate the bearing giving the necessary precise faces which limit inward movement of the bearing. Because the tube, over a considerable part of its circumference, is unaffected by this depression formation, the tube itself is generally not weakened and also there is no requirement of hot-working the end of the tube with the resultant scale formation as the depressions can be formed by cold pressing the tube.

In this way it will be realised that, in the case of an axle tube, provided the inner dimension of the tube is correct, its inner surface can accommodate the bearing with or without machining of the surface. In this way a very simple construction results which will then effectively house the bearing and the bearing can be locked axially in position by a flange or ring which is secured to the end of the axle tube to support the usual bearing retainer which engages the outer face of the outer bearing race, and may also carry the brake mechanism support.

In the case of a wheel hub assembly a short tube may have two series of spaced depressed lugs, to engage the outer races of the two bearings, and the tube may have welded to it a flange which in turn supports the wheel. In this case, the tube has a bearing at each end of the tube, and retaining flanges are not necessary.

The invention may be carried into practice in various ways, but several specific embodiments will now be described, by way of example, with reference to the accompanying drawings, in which:-

FIGURE 1 is a longitudinal sectional view of a wheel and axle supported by a bearing in the end of an axle tube according to this invention;

FIGURE 2 is an enlarged fragmentary section of an axle tube of the form shown in Figure 1;

FIGURE 3 is a transverse section of the axle tube on line 3-3 of Figure 2;

FIGURE 4 is a transverse sectional view of a hub assembly showing a tube embodying the invention used as a wheel-forming part engaging a pair of thrust bearings;

FIGURE 5 is an enlarged fragmentary section of the hub shown in Figure 4;

FIGURE 6 is an axle tube of a modified form in which the bearing housing portion is expanded to a slightly greater diameter than the tube itself;

FIGURE 7 is a transverse section on line 7-7 of Figure 6;

FIGURE 8 is a modified form of tube to an enlarged scale somewhat similar to the tube shown in Figure 4 but showing the two bearing housings of similar diameter;

FIGURE 9 is a view similar to Figure 8, but showing how a pair of tubes can have flanges formed thereon and the flanges joined together to form a wheel bearing tube support, and

FIGURE 10 is an enlarged sectional view showing how the end of the tube is machined to form a bearing recess.

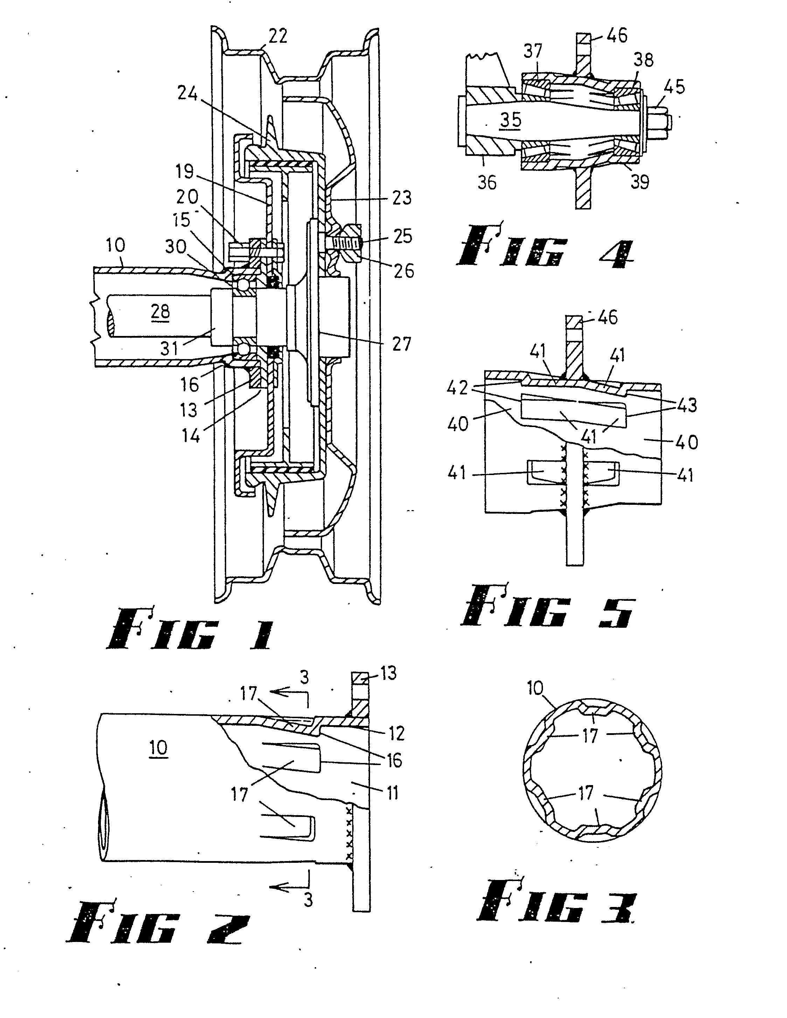

The axle tube 10 as shown in Figures 1 and 2 has at its end a bearing housing 11 preferably formed by lightly machining the inner surface 12 of the end of the axle tube after welding thereto an apertured flange 13 which serves to engage a keeper 14, which locks a bearing in place by engaging the outer face of the outer race 15 of the bearing and forcing the inner edge of the outer race of the bearing hard against the shoulders 16 formed at the inner ends of depressed lugs 17, which lugs, as will be seen particularly from Figures 2 and 3 are peripherally spaced around the tube 10 so that the tube itself remains unaffected between the peripherally spaced depressed lugs 17, but the lugs themselves are of saw-tooth formation. To ensure that the bearing will correctly fit, and be axially held, by these lugs the inner surface 12 of the end of the tube 10 which forms the bearing recess 11 is lightly machined as shown in Figure 10, the dotted line 18 showing the metal before machining. From this it will be seen that a surface 12 is formed which engages the periphery of the outer race 15 of the bearing and the shoulder 16 is formed to correctly take inward thrust on the bearing when the bearing is maintained in place by fitting the keeper 14, such as that shown in Figure 1, between the flange 13 and the brake support shield member 19, both these members being locked to the flange 14 by bolts 20.

In Figure 1 a wheel rim 22 is shown which is supported by a disc 23 locked to a brake drum 24 by studs 25 having nuts 26 on their outer ends but engaged at their inner ends on a hub 27 which forms part of the axle 28. The inner race 30 of the ball bearing is limited in its axial movement on the axle by the inner bearing race 30 engaging the hub 27 on the axle 28 on one side and a shrink-fit collar 31 on the other side.

The wheel construction can remain standard as the invention relates to the formation of the axle tube 10 and to the method of forming this axle tube by having the series of circumferentially spaced depressed lugs 17 which form the shoulders 16 which align the outer race 15 of the bearing in the axle tube 10.

Referring now to Figures 4 and 5 it will be noted that a similar construction can be used for the bearing support tube of wheel hubs of a vehicle, Figure 4 showing how a stub axle 35 is held on any usual or approved support 36 and has two thrust bearings 37 and 38 mounted on it, each disposed to engage a bearing recess 40 at one end of the tube 39, the tube 39 in this case, shown more particularly in Figure 5,being slightly conical but having at each end the bearing recess 40 formed in a cylindrical part of the tube 39 and having a series of depressed lugs 41 facing each of these bearing recesses. The lugs 41 are again of saw-tooth form although other forms could be used such as extending the depressions from the shoulder 42 at one end to a shoulder 43 at the other end. Again the ends of the tube are internally lightly machined to form exact bearing recesses 40 and and to provide accurate shoulders 42 and 43 to limit inward movement of both of the bearings 37 and 38, the normal bearing loading being achieved by means of an adjusting nut 45 which screws onto the end of a stub axle 35.

In this case a flange 46 is again welded to the tube preferably at the centre as shown, although it could be displaced toward either end, and this flange 46 is welded to the tube 39 to give a unitary construction.

In the embodiment shown in Figures 6 and 7 the axle tube 50 is slightly smaller in inner diameter than the bearing housing 51 and it will be noted that the tube 50 is expanded at the area shown at 52 and the depressed lugs 53 are again peripherally spaced around the tube 50 so that the tube extends in its normal configuration to the inner ends of the lugs 53 but in between the lugs and the tube has been expanded to the diameter which forms the bearing housing 51.

The shoulders are designated 54.   In this case the flange 55 is shown butted against the end of the tube and is welded thereto at 56.

Figure 8 is a view similar to Figure 5 but in this case the bearing recesses 60 and 61 are of the same diameter and the tube 62 is therefore of uniform diameter along its length between the depressed lugs 63 but has the lugs 63 formed inwards of the two bearing recesses to again be of saw-tooth form but, it will be realised, as was referred to in relation to Figure 4, that where the lugs 63 engage the inner faces of the outer races of bearings at two spaced localities the lugs 63 could be co-extensive as is indicated by the lines 64 and 65 in Figure 8 which shows an alternative construction.   The shoulders are designated 66.

Figure 9 again shows a wheel bearing support tube somewhat similar to that shown in Figure 8 but in this case two short tubes 70 and 71 are worked to produce flanges 72 and 73 at one end of each of the tubes and these flanges are locked together by welding or any similar means, the tubes again having bearing recesses 74 and 75 and each has a series of peripherally spaced depressed lugs 76 which form the shoulders 77 to limit inward movement of the bearings in the structure so formed.

From the foregoing it will be realised that in the case of axle tubes a simple construction results in that the end of each of the axle tubes is simply dimensioned to take the required bearing preferably with light machining accurately to form the surface and by forming the inward depressed lugs and machining the ends of these lugs the bearings inserted into the end of such an axle tube will be firmly locked against inward movement and will be supported by the metal of the tube itself without having to use an additional forging at this locality.

In the case of wheel bearing support construction the same advantages exist.

There is also the advantage that because of the spaces between the lugs a bearing puller can more readily engage the outer bearing race when a bearing is to be pulled from the bearing housing.

The flange or ring can be simply welded to the end of the tube, and any form of outer lock for the bearing can be used.   Because the end of the tube is cold worked to produce the depressed lugs and, as these can be equally spaced around the periphery of the axle tube, simple working of the tube to the final form in readiness for machining is achieved and also because the flange or ring is simply welded to the tube no problems are presented.

.11.

CLAIMS

1. A bearing tube construction comprising a tube,
a bearing housing at least one end portion of said
tube, characterised by a series of inwardly depressed
lugs spaced apart peripherally around the said tube
to define a series of shoulders at the inner end of
the said bearing housing to limit inward movement of
a bearing.

2. A bearing tube construction according to Claim 1
characterised in that the portions of the said tube
between the said lugs generally maintain the normal
tubular form, and a flange is secured to or integral
with said tube to project outwardly therefrom.

3. A bearing tube construction comprising a tube
characterised in that there is a bearing housing at
each end portion of said tube, and a series of
inwardly displaced depressed lugs spaced apart
peripherally around the said tube to define a series
of shoulders at the inner end of each said bearing
housing to limit inward axial movement of the bearings
in said housings, the portions of the said tube between
said lugs generally maintaining the normal tubular
form, and a flange secured to the said tube to project
outwardly therefrom.

4. A bearing tube according to Claims 1, 2 or 3
characterised in that the said depressed lugs
increase in depth outwardly toward the said bearing
housing or housings to form the said shoulders in
the said tube.

5. A bearing tube according to Claims 1, 2 or 3 characterised in that the inside surface of the tube where it forms the bearing housing or housings and the outwardly facing shoulders of the depressions are machined to engage respectively the outer periphery and the inner face, of an outer race of the bearing in the latter case, to limit inward axial movement of the said bearing.

6. A bearing tube construction comprising a tube, a bearing housing formed at at least one end portion of said tube, characterised by a series of inwardly displaced depressed lugs spaced apart peripherally around the said tube to form a series of inwardly-located shoulders in the said tube positioned at the inner end of the said housing to limit inward axial movement of a bearing in the said housing but generallymaintaining the normal tubular form between the said depressions, the said depressions increasing in depth outwardly toward the said bearing housing, the inner surface of the said tube where it forms said housing and the outwardly facing shoulders of the said depressions being machined, thereby to engage respectively the outer periphery and the inner face of the outer race of a bearing when inserted in said bearing housing, and a keeper secured to said tube to urge the outer race of the said bearing against the said shoulders.

7. A bearing tube according to Claim 6 characterised in that a flange is formed at that end portion of the tube which forms the said housing, and said keeper is secured to the said flange.

8. A bearing tube according to Claim 6 or Claim 7 characterised in that said tube is formed by two flanged sections joined together to define two axially aligned but spaced apart bearing housings each having between the bearing housing and the flange the said peripherally spaced depressed lugs.

FIG 1

FIG 2

FIG 3

FIG 4

FIG 5

## DOCUMENTS CONSIDERED TO·BE RELEVANT

| Category | Citation of document with indication, where appropriate, of relevant passages | Relevant to claim |
|---|---|---|
| X | US - A - 1 643 977 (T.V. BUCKWALTER) <br> * page 1, lines 50 to 68; fig. 1 to 13 * <br> -- | 1-8 |
| A,D | US - A- 1 689 989 (H.H. WILLIAMS) <br> * entire document * <br> -- | |
| A,D | US - A - 3 924 908 (R.W. GOTHAM et al.) <br> * entire document * <br> ---- | |

CLASSIFICATION OF THE APPLICATION (Int. Cl.)

F 16 C 35/067

TECHNICAL FIELDS SEARCHED (Int.Cl.)

F 16 C 35/00

CATEGORY OF CITED DOCUMENTS

X: particularly relevant
A: technological backgrouno
O: non-written disclosure
P: intermediate document
T: theory or principle underly ng the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 12-02-1980 | MASSALSKI |